Europäisches Patentamt

European Patent Office

Office européen des brevets

(11) Veröffentlichungsnummer: **0 442 078 A1**

## (12) EUROPÄISCHE PATENTANMELDUNG

(21) Anmeldenummer: 90123951.7

(22) Anmeldetag: 12.12.90

(51) Int. Cl.5: **B01D 53/00**, B01D 53/34

(30) Priorität: 15.02.90 DE 4004598

(43) Veröffentlichungstag der Anmeldung:
**21.08.91 Patentblatt 91/34**

(84) Benannte Vertragsstaaten:
**AT BE CH DE DK ES FR GB GR IT LI LU NL SE**

(71) Anmelder: **ARASIN GMBH**
**Weseler Strasse 100**
**W-4223 Voerde/Niederrhein(DE)**

(72) Erfinder: **Körner, Bernhard, Dipl.-Chem.**
**Boystrasse 70**
**W-4390 Gladbeck(DE)**

(74) Vertreter: **Seiler, Siegfried**
**c/o DEUTSCHE SOLVAY-WERKE GmbH**
**Langhansstrasse 6 Postfach 11 02 70**
**W-5650 Solingen 11(DE)**

(54) **Verfahren und Mittel zum Reinigen von Gasen oder Abgasen.**

(57) Die vorliegende Erfindung betrifft ein Verfahren zur Reinigung von Abgasen, wobei die Waschflüssigkeit in einer Gaswaschvorrichtung mit dem Abgas in Kontakt gebracht wird, ohne daß eine den Querschnitt der Gaswaschvorrichtung abdeckende Schaumbildung erfolgt. Die Schadstoffe, Verunreinigungen oder abzutrennenden Stoffe werden mit der Waschflüssigkeit zumindestens einem Reaktor oder einer ähnlichen Vorrichtung zugeführt, wo die Schadstoffe umgesetzt, abgebaut und/oder chemisch oder physikalisch geändert und/oder ganz oder teilweise nachfolgend abgetrennt werden. Die verwendete nichtschäumende oder schwachschäumende Waschflüssigkeit ist mindestens zweiphasig und besteht aus bestimmten Gewichtsmengen mindestens eines fettsäurefreien Tensides und mindestens einer ölartigen physikalisch wasserunlöslichen oder wasserschwerlöslichen Flüssigkeit (gemessen bei Wassertemperatur), mehr als 50 Gew.-% Wasser sowie 0,001 bis 15 Gew.-% mindestens eines Zusatzmittels, vorzugsweise mindestens aerobe und/oder anaerobe Bakterien (berechnet als Trockenmasse) und/oder mindestens eines Umsetzungshilfsmittels oder Agens und/oder mindestens eines feinteiligen Feststoffes und/oder mindestens eines Entschäumungs- oder Verarbeitungshilfsmittels.

Die, die organisch-chemischen Bestandteile des Gases enthaltende Waschflüssigkeit wird an oder in der Nähe des Bodens der Gaswaschvorrichtung abgeleitet oder abgezogen oder abgepumpt und unmittelbar oder unter Zwischenschaltung weiterer Verfahrensschritte zu einem Reaktions-, Umsetzungs- und/oder Absetzbehälter geführt, dort aufgeheizt und die von den organisch-chemischen Stoffen, Lösemitteln oder Schadstoffen ganz oder teilweise gereinigte Waschflüssigkeit ganz oder teilweise in die Gaswaschvorrichtung zurückgeleitet, gefüllt und erneut zur Abgasreinigung verwendet.

EP 0 442 078 A1

## VERFAHREN UND MITTEL ZUM REINIGEN VON GASEN ODER ABGASEN

Die vorliegende Erfindung betrifft ein Verfahren und ein nichtschäumendes oder schwachschäumendes Mittel zum Reinigen von Gasen oder Abgasen unter Abtrennung von unerwünschten chemischen Bestandteilen, vorzugsweise von organisch-chemischen Bestandteilen (ausgenommen Abluft aus Lackspritzkabinen), wobei das Mittel mindestens zweiphasig ist und bestimmte Gewichtsmengen mindestens eines fettsäurefreien, nichtbakteriziden Tensides, mindestens einer nichtbakteriziden ölartigen physikalisch wasserunlöslichen oder wasserschwerlöslichen Flüssigkeit, mindestens eines Zusatzmittels oder Umsetzungshilfsmittels und/oder bestimmte Gewichtsmengen aerober und/oder anaerober Bakterien oder eines aeroben und/oder anaeroben Bakterienstammes, mehr als 50 Gew.-% Wasser sowie gegebenenfalls ein Entschäumungsmittel, Verarbeitungshilfs- und/oder Zusatzmittel enthält oder daraus besteht, in feinverteiltem Zustand mit dem Abgas in Kontakt gebracht und über Reaktions-, Umsetzungs- und/oder Absetzbehälter geführt wird.

Es sind bereits Verfahren zur Reinigung von Gasen bekannt, bei denen die unerwünschten chemischen Bestandteile aus dem Gas oder Abgas abgetrennt und in einen Behälter, in dem aerobe oder anaerobe Bakterien angeordnet sind, geleitet werden, wo sie mittels Bakterien abgebaut werden. Die Aufnahme dieser unerwünschten Verunreinigungen mittels Wasser, beispielsweise in Waschtürmen, ist jedoch häufig unzureichend. Andere Absorptionsmedien stören oder erschweren das Verfahren. Weiterhin ist die Verfügbarkeit oder Verteilung des Schadstoffes für die Bakterien in der wäßrigen Phase häufig unzureichend, so daß sich geringere Wirkungsgrade ergeben.

Es wird daher auch ein anderes Verfahren in der Praxis verwendet, bei dem unter Benutzung eines Tensides ein Schaum gebildet und das zu reinigende Gas durch den querschnittsabdeckenden Schaum geleitet wird. Die Abtrennung der unerwünschten Bestandteile erfolgt dann auf physikalischem Wege, z. B. mittels Adsorptionsmitteln, durch Erhitzen der Schaumflüssigkeit und dgl. in einem getrennten Behälter (vgl. DE-PS 18 07 327). Eine Kombination des Schaumverfahrens mit Bakterien stößt insofern auf Schwierigkeiten, als die auftretenden Scherkräfte die Biomasse beeinträchtigen oder schädigen und/oder eine Austragung bzw. Trennung der Biomasse aus dem Absorptionsmedium im Wäscher und/oder im nachfolgenden aeroben Reaktor erfolgt.

Ziel und Aufgabe der vorliegenden Erfindung war es, ein Verfahren und ein Mittel zu finden, bei dem mit einem hohen Wirkungsgrad die Verunreinigungen aus dem Gas entfernt und auf biologischem Wege möglichst unschädlich für die Umwelt gemacht werden können. Das Mittel und das Verfahren sollten sowohl für größere als auch für kleinere Anlagen geeignet sein und auch unterschiedliche Verunreinigungen des Gases (ausgenommen Abluft aus Lackspritzkabinen) aufnehmen können. Die Verunreinigungen, besonders die schwer wasserlöslichen Verunreinigungen, sollten aus dem Gas entfernt und durch biologischen Abbau umgewandelt werden, ohne daß die Gefahr der Trennung und/oder Austragung der Biomasse aus dem System besteht.

Erfindungsgemäß wurde festgestellt, daß diesen Zielen und Aufgaben ein Verfahren zur Reinigung von Abgasen gerecht wird, wobei die Waschflüssigkeit in einer Gaswaschvorrichtung kontinuierlich oder diskontinuierlich verteilt und mit dem Abgas in Kontakt gebracht wird, die Schadstoffe, Verunreinigungen oder abzutrennenden Stoffe mit der Waschflüssigkeit zumindest einem Reaktor oder einer ähnlichen Vorrichtung zugeführt, wo die Schadstoffe oder ein Teil derselben auf biologischem Wege umgesetzt abgebaut und/oder chemisch oder physikalisch geändert und/oder ganz oder teilweise nachfolgend abgetrennt werden. Gemäß der Erfindung ist die dabei verwendete nichtschäumende oder schwachschäumende Waschflüssigkeit mindestens zweiphasig, bestehend aus mindestens einer äußeren Wasserphase und einer inneren Ölphase und 0,1 bis 10 Gew.-% mindestens eines fettsäurefreien Tensides, 1 bis 25 Gew.-% mindestens einer ölartigen physikalisch wasserunlöslichen oder wasserschwerlöslichen Flüssigkeit (gemessen bei Wassertemperatur), mehr als 50 Gew.-% Wasser sowie 0,001 bis 15 Gew.-% mindestens eines Zusatzmittels, vorzugsweise mindestens aerobe und/oder anaerobe Bakterien (berechnet als Trockenmasse) und/oder mindestens eines Umsetzungshilfsmittels oder Agens und/oder mindestens eines feinteiligen Feststoffes und/oder mindestens eines Entschäumungs- oder Verarbeitungshilfsmittels.

Die Waschflüssigkeit gelangt im fein- oder feinstverteilten Zustand mit dem in Gegenrichtung geleiteten Abgas in Kontakt oder wird in Gegenwart des Abgases vernebelt, verdüst oder verwirbelt, ohne daß eine den Querschnitt der Gaswaschvorrichtung abdeckende Schaumbildung erfolgt. Die, die organisch-chemischen Bestandteile des Gases oder die Verunreinigungen enthaltende Waschflüssigkeit wird an oder in der Nähe des Bodens der Gaswaschvorrichtung abgeleitet oder abgezogen oder abgepumpt und unmittelbar oder unter Zwischenschaltung weiterer Verfahrensschritte zu einem Reaktions-, Umsetzungs- und/oder Absetzbehälter geführt, und die von den organisch-chemischen Stoffen, Lösemitteln oder Schadstoffen ganz oder teilweise gereinigte Waschflüssigkeit wird ganz oder teilweise in die Gaswaschvorrichtung zurückgeleitet und erneut zur Abgasreinigung verwendet.

Nach einer bevorzugten Ausführungsform wird für das Verfahren eine Waschflüssigkeit verwendet, die 0,5 bis 2,5 Gew.-% mindestens eines fettsäurefreien Tensides, 1,5 bis 20 Gew.-% mindestens einer ölartigen physikalisch wasserunlöslichen oder wasserschwerlöslichen Flüssigkeit (gemessen bei Wassertemperatur), mehr als 55 Gew.-% Wasser sowie 0,01 bis 10 Gew.-% mindestens eines Zusatzmittels, vorzugsweise mindestens aerobe und/oder anaerobe Bakterien (berechnet als Trockenmasse) und/oder mindestens eines Umsetzungshilfsmittels oder Agens und/oder mindestens eines feinteiligen Feststoffes und/oder mindestens eines Entschäumungs- oder Verarbeitungshilfsmittels, enthält oder daraus besteht, wobei die Waschflüssigkeit im fein- oder feinstverteilten Zustand mit dem in Gegenrichtung geleiteten Abgas in Kontakt gelangt oder in Gegenwart des Abgases vernebelt, verdüst oder verwirbelt wird, ohne daß eine den Querschnitt der Gaswaschvorrichtung abdeckende Schaumbildung erfolgt. Die, die organisch-chemischen Bestandteile des Gases oder die Verunreinigungen enthaltende Waschflüssigkeiit wird an oder in der Nähe des Bodens der Gaswaschvorrichtung abgeleitet oder abgezogen oder abgepumpt und unmittelbar oder unter Zwischenschaltung weiterer Verfahrensschritte zu einem Reaktions-, Umsetzungs- und/oder Absetzbehälter geführt und die von den organisch-chemischen Stoffen, Lösemitteln oder Schadstoffen ganz oder teilweise gereinigte Waschflüssigkeit ganz oder teilweise in die Gaswaschvorrichtung zurückgeleitet und erneut zur Abgasreinigung verwendet.

Das eingeleitete Gas oder Abgas wird vorzugsweise in Gegenstromrichtung zu der Waschflüssigkeit geleitet und die Waschflüssigkeit wird in einer Mindestberieselungsdichte von 1 bis 100 m³/m²h, vorzugsweise 5 bis 75 m³/m²h, in der Gaswaschvorrichtung verteilt.

Als fettsäurefreies Tensid wird ein Gemisch von mindestens 2 Tensiden mit unterschiedlichen HLB-Werten, die sich um mehr als 3 (HLB-Werte), vorzugsweise mehr als 4 (HLB-Werte), unterscheiden, verwendet, und/oder das Tensid ist ein nichtschäumendes oder schwachschäumendes Tensid oder Tensidgemisch, und/oder das Tensid oder Tensidgemisch wird zusätzlich mit einem Entschäumungsmittel versehen. Durch die Mitverwendung des Hilfsmittels und/oder des Tensidgemisches mit unterschiedlichen HLB-Werten wird der Wirkungsgrad des Mittels erheblich verbessert.

Nach einer bevorzugten Ausführungsform wird gemäß der Erfindung eine Waschflüssigkeit verwendet, die 0,01 bis 10 Gew.-%, vorzugsweise 0,05 bis 8,5 Gew.-%, mindestens eines gelösten, eines dispergierten oder suspendierten Hilfsmittels oder Agens enthält, das mit dem oder den Schadstoff(en) oder abzuscheidenden Stoff(en) unter Polymerisation, Polykondensation und/oder Polyaddition reagiert und/oder die Polymerisation oder Polykondensation und/oder Polyaddition initiiert oder beschleunigt.

Die Art und die eingesetzte Konzentration (innerhalb des angegebenen prozentualen Gewichtsbereiches) richtet sich nach der Art und der chemischen Zusammensetzung der zu entfernenden Verunreinigungen. Nach einer bevorugten Ausführungsform werden ionische oder organische Kettenstarter, Katalysatoren und/oder Mittel zur Reaktionsbeschleunigung eingesetzt, chemische Mittel oder Komponenten zugefügt, die mit dem abzuscheidenden Schadstoff unter Polymerisation, Kondensation oder Polykondensation und/oder Addition oder Polyaddition reagieren, wobei bevorzugt solche eingesetzt werden, die zu leicht mechanisch abtrennbaren oder schwerlöslichen Verbindungen im Medium führen. Die Abtrennung auf physikalischem Wege kann in an sich bekannten mechanischen Verfahren, vorzugsweise durch Filtration, Flotation und/oder Sedimentation erfolgen.

Als Katalysator oder Beschleuniger werden u. a. organische oder anorganische Peroxide, vorzugsweise Alkaliperoxide, Peroxo- und Peroxyverbindungen, Ammoniumperoxodisulfate, peroxidische Borverbindungen, Alkylperoxide, insbesondere Butylperoxid, Azo- und/oder Nitrilverbindungen, z. B. Azoisobutylnitril, saure oder basische katalytisch wirkende Verbindungen und dgl. eingesetzt.

Die Schadstoffe oder Verunreinigungen enthaltende Waschflüssigkeit wird gemäß der Erfindung nach dem Durchtritt durch mindestens einen Gaswaschturm oder eine ähnliche Gaswaschvorrichtung unmittelbar oder unter Zwischenschaltung weiterer Vorrichtungen als Gesamt- oder Teilstrom zumindestens einem Reaktions- oder Umsetzungsbehälter zugeführt und auf Reaktionstemperatur eingestellt, vorzugsweise erwärmt. Nach einer bevorzugten Ausführungsform wird die Schadstoffe oder Verunreinigungen enthaltende Waschflüssigkeit im Reaktions- oder Umsetzungsbehälter auf Temperaturen zwischen 20 und 105 °C, vorzugsweise 35 bis 95 °C, erwärmt und vor Rückführung in den Gaswaschturm oder die Gaswaschvorrichtung abgekühlt. Bei der Abkühlung werden Temperaturdifferenzen von mehr als 10 °C, vorzugsweise mehr als 20 °C eingestellt.

Nach einer weiteren Ausführungsform enthält die verwendete Waschflüssigkeit 0,001 bis 5 Gew.-%, vorzugsweise 0,5 bis 1,5 Gew.-%, aerobe und/oder anaerobe Bakterien oder eines aeroben und/oder anaeroben Bakterienstammes (berechnet als Trockenmasse an Bakterien). Bevorzugt werden bei dieser Ausführungsform nichtbakterizide Tenside und/oder nichtbakterizide Entschäumungsmittel sowie eine nichtbakterizide ölartige Flüssigkeit im Mittel verwendet.

Nach einer bevorzugten Ausführungsform wird neben dem nichtbakteriziden Tensid oder Tensidgemisch mindestens ein inerter feinteiliger Feststoff in einer Gewichtsmenge von 0,05 bis 8 Gew.-%, vorzugsweise 0,5 bis 5 Gew.-%, und einer Teilchengröße unter 1 $\mu$m, vorzugsweise unter 0,1 $\mu$m, in der Waschflüssigkeit verwendet oder dieser zugefügt.

Nach einer weiteren bevorzugten Ausführungsform ist im Mittel das Tensid oder Tensidgemisch in der angegebenen Matrix (Mittel und absorbierte oder absorbierte und gegebenenfalls absorbierte Bestandteile) biologisch schwer abbaubar, innerhalb von 24 Std. nur maximal bis zu 20 Gew.-%, vorzugsweise bis zu 10 Gew.-% (bezogen auf den Gesamttensidgehalt im Mittel, umgerechnet auf 100Gew.-Teile Tensid oder Tensidgemisch).

Das in der Waschflüssigkeit verwendete Tensid oder Tensidgemisch besteht vorzugsweise aus mindestens einem fettsäurefreien, nichtionogenen, nichtschäumenden oder schwachschäumenden Tensid und/oder mindestens einem nichtionogenen schäumenden und fettsäurefreien Tensid, das zusätzlich mindestens ein Entschäumungsmittel enthält, und/oder aus einem Gemisch von mindestens einem nichtionogenen Tensid mit mindestens einem ionogenen Tensid, die nichtschäumend oder schwachschäumend sind oder ein Entschäumungsmittel enthalten.

Die Waschflüssigkeit wird bevorzugt nach dem Durchtritt durch die Gaswaschvorrichtung in mindestens einen, von der Gaswaschvorrichtung getrennt angeordneten Reaktor geleitet. Die Waschflüssigkeit enthält mindestens ein chemisches Umsetzungshilfsmittel oder Agens, das mit dem oder den Schadstoff(en) oder abzuscheidenden Stoff(en) unter Polymerisation, Polykondensation und/od Polyaddition reagiert und/oder die Polymerisation oder Polykondensation und/oder Polyaddition initiiert oder beschleunigt. Die Waschflüssigkeit wird in mindestens einem Reaktions- oder Umsetzungsbehälter auf Reaktionstemperatur erwärmt und vor Rückführung in den Gaswaschturm oder die Gaswaschvorrichtung abgekühlt. Da sich die Konzentrationen der Stoffe, insbesondere der Umsetzungshilfsmittel ändern, erfolgt nach einer bevorzugten Ausführungsform eine Zudosierung des Umsetzungshilfsmittels nach dem Durchtritt durch die Gaswaschvorrichtung oder vor bzw. im Reaktionsbehälter auf die angegebenen Konzentrationen.

Nach einer bevorzugten Ausführungsform enthält das Mittel 0,1 bis 10 Gew.-% mindestens eines fettsäurefreien Tensides, 1 bis 25 Gew.-% mindestens einer ölartigen physikalisch wasserunlöslichen oder wasserschwerlöslichen Flüssigkeit (gemessen bei Wassertemperatur), mehr als 50 Gew.-% Wasser 0,001 bis 15 Gew.-% mindestens eines Zusatzmittels, vorzugsweise mindestens eines löslichen, dispergierbaren oder suspendierbaren Hilfsmittels, das mit dem oder den Schadstoff(en) oder abzuscheidenden Stoff(en) unter Polymerisation, Polykondensation oder Polyaddition reagiert und/oder die Polymerisation, Polykondensation oder Polyaddition initiiert oder beschleunigt, und/oder das Tensid besteht aus einem Gemisch mindestens 2 Tensiden mit unterschiedlichen HLB-Werten, die sich um mehr als 3 (HLB-Werte) unterscheiden, und/oder das Mittel enthält mindestens ein Verarbeitungshilfs-, Entschäumungsmittels und/oder Bakterien.

Nach der bevorzugten Ausführungsform enthält das Mittel 0,5 bis 2,5 Gew.-% mindestens eines fettsäurefreien Tensides, 1,5 bis 20 Gew.-% mindestens einer ölartigen physikalisch wasserunlöslichen oder wasserschwerlöslichen Flüssigkeit (gemessen bei Wassertemperatur), mehr als 55 Gew.-% Wasser, 0,5 bis 5 Gew.-% mindestens eines inerten feinteiligen Feststoffes mit einer Teilchengröße unter 0,1 $\mu$m und/oder 0,01 bis 10 Gew.-% mindestens eines Zusatzmittels, vorzugsweise eines löslichen, dispergierbaren oder suspendierbaren Hilfsmittels, das mit dem oder den Schadstoff(en) oder abzuscheidenden Stoff(en) unter Polymerisation, Polykondensation oder Polyaddition reagiert oder die Polymerisation, Polykondensation oder Polyaddition initiiert oder beschleunigt und/oder das Tensid besteht aus einem Gemisch von mindestens 2 Tensiden mit unterschiedlichen HLB-Werten, die sich um mehr als 5 (HLB-Werte) unterscheiden, und/oder das Mittel enthält mindestens ein Verarbeitungshilfs-, Entschäumungs-und/oder Zusatzmittel und/oder aerobe und/oder anaerobe Bakterien oder es besteht daraus.

Das Tensid ist vorzugsweise ein nichtschäumendes oder schwachschäumendes Tensid oder das Tensid oder Tensidgemisch enthält zusätzlich ein Entschäumungsmittel.

Das in dem Mittel enthaltene Tensid oder Tensidgemisch besteht aus mindestens einem nichtbakteriziden, fettsäurefreien, nichtionogenen, nichtschäumenden oder schwachschäumenden Tensid und/oder mindestens einem nichtionogenen schäumenden nichtbakteriziden und fettsäurefreien Tensid, das zusätzlich mindestens ein nichtbakterizides Entschäumungsmittel enthält, und/oder aus einem Gemisch von mindestens einem nichtionogenen, nichtbakteriziden Tensid mit mindestens einem ionogenen nichtbakteriziden Tensid, die nichtschäumend oder schwachschäumend sind oder ein Entschäumungsmittel enthalten, oder das Mittel enthält eine oder mehrere dieser Tensid-Kombinationen.

Wie bereits erwähnt ist das Tensid oder Tensidgemisch in der angegebenen Matrix (Mittel und absorbierte oder absorbierte und gegebenenfalls adsorbierte Bestandteile) biologisch schwer abbaubar,

4

innerhalb von 24 Std. nur maximal bis zu 20 Gew.-%, vorzugsweise bis zu 10 Gew.-% (bezogen auf den Gesamttensidgehalt im Mittel umgerechnet auf 100 Gew.-Teile Tensid oder Tensidgemisch) und das mindestens zweiphasige Mittel besteht aus mindestens einer äußeren Wasserphase und einer innere Ölphase.

Nach einer anderen bevorzugten Ausführungsform enthält der inerte feinteilige Feststoff ein Oberflächenbehandlungsmittel oder -modifizierungsmittel, vorzugsweise ein Hydrophobierungsmittel oder Coatingmittel oder ist ganz oder teilweise auf der Oberfläche damit bedeckt oder überzogen.

Nach einer weiteren bevorzugten Ausführungsform sind 0,001 bis 5 Gew.-% aerobe und/oder anaerobe Bakterien oder eines aeroben und/oder anaeroben Bakterienstammes (berechnet als Trockenmasse an Bakterien), vorzugsweise 0,05 bis 1,5 Gew.-%, im Mittel enthalten.

Die im Mittel enthaltenden Bakterien bestehen nach einer Ausführungsform zu mehr als 80 Gew.-%, vorzugsweise zu mehr als 95 Gew.-% (bezogen auf 100 Gew.-% eingesetzte Bakterien), aus aeroben Bakterien.

Die ölartige physikalisch wasserunlösliche oder wasserschwerlösliche organisch-chemische Flüssigkeit oder das Flüssigkeitsgemisch weist einen Siedepunkt von mehr als 450 K, vorzugsweise mehr als 520 K (gemessen bei 1 bar oder 1000 hPa), und/oder einen Dampfdruck unter 1 hPa, vorzugsweise unter 0,1 hPa (gemessen bei 293,15 K), auf.

Die ölartige wasserunlösliche oder wasserschwerlösliche organisch-chemische Flüssigkeit oder das ölartige Flüssigkeitsgemisch enthält mindestens eine flüssige organisch-chemische Verbindung oder ein Verbindungsgemisch, die bzw. das Ester-, Äther-, Hydroxy-, Oxyäther- oder Hydroxyäther-, Keto-, und/oder organische Phosphatgruppen und/oder einen Weichmacher für Kunststoffe und/oder ein Silikonöl enthält und vorzugsweise nicht bakterizid ist oder besteht daraus.

Die organisch-chemische, ölartige, wasserunlösliche oder wasserschwerlösliche Flüssigkeit oder das ölartige Flüssigkeitsgemisch in der angegebenen Matrix (Mittel und absorbierte oder absorbierte und gegebenenfalls adsorbierte Bestandteile) ist bevorzugt biologisch schwer abbaubar, innerhalb von 24 Std. nur maximal bis zu 2 Gew.-%, vorzugsweise kleiner als 1 Gew.-%, (bezogen auf 100 Gew.-Teile der im Mittel enthaltenen ölartigen, organisch-chemischen, wasserunlöslichen oder wasserschwerlöslichen Flüssigkeit oder der Mischung der ölartigen, organisch-chemischen wasserunlöslichen oder wasserschwerlöslichen Flüssigkeiten).

Nach einer weiteren Ausführungsform enthält das Mittel 0,001 bis 3 Gew.-%, vorzugsweise 0,1 bis 1 Gew.-%, mindestens eines Co-Surfactant, Co-Tensides oder eines Hilfstensides, das die Wirkung des Tensides verstärkt und/oder das Tensid teilweise ersetzt, vorzugsweise ausgewählt aus der Gruppe der ein- oder mehrwertigen Alkohole oder Polyalkohole, Hydroxyalkohole, Äther oder Polyäther, Ester und/oder Hydroxyäther oder Polyhydroxyäther.

Die Bestandteile des Mittels werden als in Wasser nichtschäumende oder in Wasser schwachschäumende Verbindungen ausgewählt und/oder mit einem entsprechenden Gewichtsanteil eines Entschäumungsmittels in einer derartigen Gewichtskonzentration versehen und/oder in einer derartigen Auswahl eingesetzt, daß ein nichtschäumendes oder sehr schwach schäumendes Mittel zur Reinigung von Gasen oder Abgasen vorliegt.

Nach einer bevorzugten Ausführungsform beträgt das Gewichtsverhältnis der nichtbakteriziden ölartigen Flüssigkeit zu Wasser 1 : 2 bis 1 : 100, vorzugsweise 1 : 4 bis 1: 60.

Nach einer weiteren bevorzugten Ausführungsform beträgt das Gewichtsverhältnis von Tensid und/oder feinteiligem inerten Feststoff zu der nichtbakteriziden, ölartigen Flüssigkeit 1 : 0,8 bis 1 : 45, vorzugsweise 1 : 1,2 bis 1 : 25.

Nach einer anderen bevorzugten Ausführungsform enthält das Mittel als Zusatzmittel 0 oder 0,1 Gew.-% bis 10 Gew.-%, vorzugsweise 0,5 Gew.-% bis 9,8 Gew.-% eines feinteiligen Trägerstoffes mit einem mittleren Körnungsdurchmesser von unter 4 mm, vorzugsweise unter 1 mm, besonders bevorzugt unter 200 µm.

Dieser Trägerstoff als Zusatzmittel ist vorzugsweise ausgewählt aus der Gruppe der Trägerstoffe mit einer spezifischen Oberfläche (gemessen nach BET) von mehr als 300 m²/g, vorzugsweise Aktivkohle, Silikate, Mischsilikate, Hydroxysilikate, Erdalkalioxide und/oder Aluminiumverbindungen enthaltende Silikate, Siliziumverbindungen einschließlich Silikate oder Siliziumoxid enthaltende Erdalkalioxide oder Erdalkalimischoxide, Kieselsäure, keramische Trägermaterialien, sämtliche vorgenannten Trägermaterialien in hydrophobierter oder nichthydrophobierter Form, allein oder im Gemisch mit anderen Trägerstoffen.

Das erfindungsgemäße Mittel zum Reinigen von Gasen oder Abgasen bricht nur sehr schwer. Auch bei einer Änderung des pH-Wertes bzw. pH-Wertänderungen in gewissen Bereichen tritt ein Brechen der Flüssigkeit nicht auf.

Als ölartige, physikalisch, wasserunlösliche oder wasserschwerlösliche Flüssigkeit werden nach einer

5

Ausführungsform entsprechende Aliphate, Aromate, Paraffinkohlenwasserstoffe, Mineralöle oder deren Gemische und dgl. eingesetzt mit entsprechenden Siedepunkten. Diese Ausführungsform ist lediglich bei Vorhandensein ganz bestimmter Abgase, z. B. kunstharzhaltigen Abgasen zweckmäßig.

Bevorzugt wird jedoch eine ölartige, wasserunlösliche oder wasserschwerlösliche organische Flüssigkeit oder ein organisches Flüssigkeitsgemisch eingesetzt, die bzw. das Ester-, Ether-, Hydroxy-, Oxyetheroder Hydroxyethergruppen, und/oder halogenierte organische Verbindungen mit mehr als 5 C-Atomen, Keto- und/oder organische Phosphatgruppen und/oder einen Weichmacher für Kunststoffe und/oder ein Silikonöl enthält und nichtbakterizid ist.

Als Weichmacher werden vor allem solche Verbindungen eingesetzt, die in dem Tensid oder Tensidgemisch und/oder in dem im Gas enthaltenen flüssigen oder gasförmigen organischchemischen Bestandteilen, vorzugsweise organisch-chemischen Lösungsmitteln, löslich sind. Weiterhin werden vorzugsweise bei Raumtemperatur und/oder der Verfahrenstemperatur flüssige Weichmacher eingesetzt. Vorzugsweise werden als Weichmacher z. B. Alkyl-, Aryl- oder Alkyl- Arylphthalate, vorzugsweise Diisononylphthalat und/oder Benzylbutylphthalate, Alkylphosphate bzw. Phosphorsäureester, vorzugsweise Tributylphosphat, Adipate, vorzugsweise Benzyloctyladipat und/oder Diisononyladipat, Di-(2-äthylhexyl)-adipat, Stearate und Oleate, z. B. Alkylstearate oder Alkyloleate, vorzugsweise Butyloleat, Butylstearat oder Amylstearat, Bis-(dimethylbenzyl)ether, p-Toluolsulfonsäureäthylester, Glycerinester, Glycerinether oder höhermolekulare Glykolether eingesetzt. Als Ersatz oder Teilersatz für Weichmacher können vorteilhaft gleiche Gewichtsmengen flüssiger organisch-chemischer Verbindungen mit mehr als 5 C-Atomen auf der Basis von Ketonen, z. B. Ketone mit Alkyl-, Aryl- der Arylalkylgruppen, vorzugsweise Benzophenon, Äthylbenzophenon und/oder halogenierte, vorzugsweise fluorierte organisch-chemische Verbindungen mit mehr als 5 C-Atomen und/oder Polyvinylalkylether, vorzugsweise Polyvinylmethylether, verwendet werden. Nach einer Ausführungsform werden bevorzugt Gemische eingesetzt.

Nach einer bevorzugten Ausführungsform wird der Weichmacher oder ein anderer Ester, der Ether, das Etherderivat, der Polyether oder der Hydroxygruppen enthaltende Polyether durch mindestens einen Stabilisator stabilisiert.

Nach einer anderen bevorzugten Ausführungsform ist der flüssige Weichmacher oder andere flüssige Ester ganz oder teilweise durch mindestens einen flüssigen Ether mit mehr als 5 C-Atomen, vorzugsweise mit mehr als 8C-Atomen, und/oder ein mehr als 5 C- Atome, vorzugsweise mehr als 8 C-Atome, enthaltendes Etherderivat, einen Polyether und/oder einen Hydroxygruppen enthaltenden Ether oder Polyether ersetzt.

Als Tenside werden bevorzugt nichtionische Tenside eingesetzt, vorzugsweise Alkyl- und Alkylphenylpolyethylenglykolether, Alkylolamide oder Trialkylaminoxide und/oder fluorhaltige Tenside.

Nach einer anderen bevorzugten Ausführungsform werden die nichtionischen Tenside im Gemisch mit ionischen Tensiden, vorzugsweise kationischen und/oder anionischen und/oder amphoteren Tensiden eingesetzt.

Nach einer bevorzugten Ausführungsform beträgt das Gewichtsverhältnis von nichtionischem Tensid zu ionischem Tensid 50 : 1 bis 1 : 1, vorzugsweise 25 : 1 bis 5 : 1.

Als Tenside oder Tensidgemische werden vorzugsweise Fluortenside, Polyoxyethylen-Verbindungen und/oder Polyalkylenglykolether und/oder Polyoxyethylen-Nonylphenol für sich allein oder in Kombination mit Isopropylamin-Dodecylbenzolsulfat und/oder Alkylarylsulfonat und/oder fluorhaltige Tenside verwendet.

Beispiele

1. Zur Herstellung des Mittels mischt man in einem Behälter bis zum Erhalt einer feinteiligen Emulsion:

10 Gew.-Teile Di-(2-ethylhexyl)phthalat als ölartige, schwer wasserlösliche Flüssigkeit

2 " eines Nonylphenolpolyglykol-ethers mit durchschnittlich 9 angelagerten Molekülen Ethylenoxid/Molekül $(C_9H_{19}\text{-}\langle\!\!\bigcirc\!\!\rangle\text{-}O\text{-}(C_2H_4O)_{\overline{x}}\text{-}H, \cdot \overline{x}=9)$ als nichtionisches, fettsäurefreies, schwach-schäumendes Tensid

3 " eines hochdispersen, amorphen Siliciumdioxids mit einer durch-schnittlichen Teilchengröße von 12 nm; (Aersosil $^{(R)}$ 200 (Fa. Degussa)) als inerter feinteiliger Feststoff

und

85 " Wasser.

2. Zur Herstellung des Mittels mischt man in einem Behälter bis zum Erhalt einer feinteiligen Emulsion:

15 Gew.-Teile Di-(2-ethylhexyl-phthalat als

7

ölartige, schwer wasserlösliche Flüssigkeit

1 " eines Nonylphenolpolyglykolethers mit durchschnittlich
12 angelagerten Molekülen
Ethylenoxid/Molekül
$(C_9H_{19}-\langle\bigcirc\rangle-O-(C_2H_4O)_{\overline{x}}-H, \cdot \overline{x}=12)$
als nichtionisches, fettsäurefreies, schwachschäumendes
Tensid

und

1 " eines Nonylphenolpolyglykolethers mit durchschnittlich
4 angelagerten Molekülen
Ethylenoxid/Molekül
$(C_9H_{19}-\langle\bigcirc\rangle-O-(C_2H_4O)_{\overline{x}}-H, \cdot \overline{x}=4)$

als Gemisch aus nichtionischen,
fettsäurefreien, schwachschäumenden Tensiden mit
HLB-Werten, die sich um mehr als
5 (HLB-Werte) unterscheiden

0,5 " Kaliumperoxodisulfat $(K_2S_2O_8)$ als
lösliches Hilfsmittel, das mit
dem oder den Schadstoff(en)
oder abzuscheidenden Stoff(en)
unter Polymerisation, Polykondensation oder Polyaddition
reagiert oder die Polymerisation, Polykondensation oder
Polyaddition initiiert oder
beschleunigt

und

82,5 "            Wasser.

3. Zur Herstellung des Mittels mischt man in einem Behälter bis zum Erhalt einer feinteiligen Emulsion:

10   Gew.Teile        Di-(2-ethylhexyl)phthalat als
                      nichtbakterizide, ölartige,
                      schwer wasserlösliche Flüssig-
                      keit

2    "                eines Nonylphenolpolyglykol-
                      ethers mit durchschnittlich 9
                      angelagerten Molekülen Ethylen-
                      oxid/Molekül($C_9H_{19}$- ⬡-O-
                      $(C_2H_4O)_{\bar{x}}$-H, $\bar{x}=9$) als nichtio-
                      nisches, fettsäurefreies,
                      schwachschäumendes Tensid

0,3  "                Bakterien (ber. als Trocken-
                      masse)(aus dem Klärschlamm
einer
                      Kläranlage)

0,5  "                Polydimethylsiloxan ($^{(R)}$Baysilon
                      M 2000 (Fa. Bayer)) als Ent-
                      schäumungsmittel

                      und

87,2 "                Wasser

4. Zur Herstellung des Mittels mischt man in einem Behälter bis zum Erhalt einer feinteiligen Emulsion:

9

| 10 Gew.-Teile | Di-(2-ethylhexyl)phthalat als nichtbakterizide, ölartige, schwer wasserlösliche Flüssigkeit |
|---|---|
| 1 " | eines Nonylphenolpolyglykolethers mit durchschnittlich 9 angelagerten Molekülen Ethylenoxid/Molekül $(C_9H_{19}-\langle\!\langle\bigcirc\rangle\!\rangle-0-(C_2H_4O)_{\overline{x}}-H, \cdot \overline{x}=9)$ als nichtionisches, fettsäurefreies, schwachschäumendes Tensid |
| 0,3 " | Bakterien (ber. als Trockenmasse) (aus dem Klärschlamm einer Kläranlage) |
| 2 " | eines hochdispersen, amorphen Siliciumdioxids mit einer durchschnittlichen Teilchengröße von 12 nm; $(^{(R)}$Aerosil 200 (Fa.Degussa) als inerter feinteiliger Feststoff) |
| | und |
| 86,7 " | Wasser. |

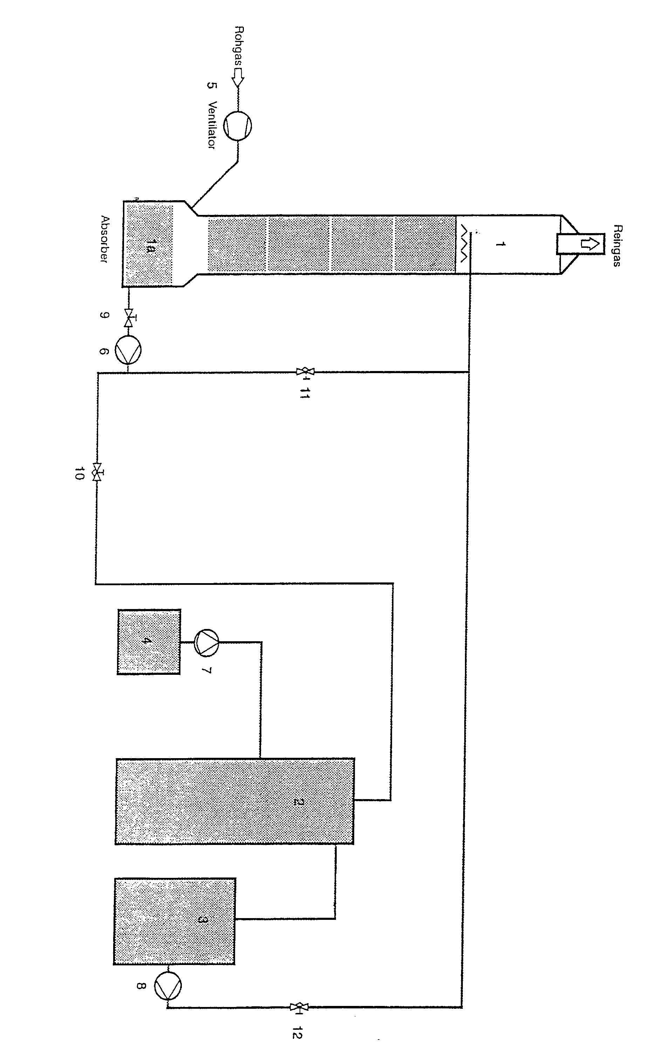

**Patentansprüche**

1. Verfahren zur Reinigung von Abgasen, wobei die Waschflüssigkeit in einer Gaswaschvorrichtung kontinuierlich oder diskontinuierlich dort verteilt und mit dem Abgas in Kontakt gebracht, die Schadstoffe, Verunreinigungen oder abzutrennenden Stoffe mit der Waschflüssigkeit zumindestens einem Reaktor oder einer ähnlichen Vorrichtung zugeführt, wo die Schadstoffe oder ein Teil derselben auf biologischem Wege umgesetzt, abgebaut und/oder chemisch oder physikalisch geändert und/oder ganz oder teilweise nachfolgend abgetrennt werden, dadurch gekennzeichnet, daß die verwendete nichtschäumende oder schwachschäumende Waschflüssigkeit mindestens zweiphasig ist, bestehend aus mindestens einer äußeren Wasserphase und einer inneren Ölphase und

0,1 bis 10 Gew.-% mindestens eines fettsäurefreien Tensides,

EP 0 442 078 A1

1 bis 25 Gew.-% mindestens einer ölartigen physikalisch wasserunlöslichen oder wasserschwerlöslichen Flüssigkeit (gemessen bei Wassertemperatur),

mehr als 50 Gew.-% Wasser sowie

0,001 bis 15 Gew.-% mindestens eines Zusatzmittels, vorzugsweise mindestens aerobe und/oder anaerobe Bakterien (berechnet als Trockenmasse) und/oder mindestens eines Umsetzungshilfsmittels oder Agens und/oder mindestens eines feinteiligen Feststoffes und/oder mindestens eines Entschäumungs- oder Verarbeitungshilfsmittels,

daß die Waschflüssigkeit im fein- oder feinstverteilten Zustand mit dem in Gegenrichtung geleiteten Abgas in Kontakt gelangt oder in Gegenwart des Abgases vernebelt, verdüst oder verwirbelt wird, ohne daß eine den Querschnitt der Gaswaschvorrichtung abdeckende Schaumbildung erfolgt, daß die, die organisch-chemischen Bestandteile des Gases oder die Verunreinigungen enthaltende Waschflüssigkeit an oder in der Nähe des Bodens der Gaswaschvorrichtung abgeleitet oder abgezogen oder abgepumpt und unmittelbar oder unter Zwischenschaltung weiterer Verfahrensschritte zu einem Reaktions-, Umsetzungs- und/oder Absetzbehälter geführt und die von den organisch-chemischen Stoffen, Lösemitteln oder Schadstoffen ganz oder teilweise gereinigte Waschflüssigkeit ganz oder teilweise in die Gaswaschvorrichtung zurückgeleitet und erneut zur Abgasreinigung verwendet wird.

2. Verfahren nach Anspruch 1, dadurch gekennzeichnet, daß für das Verfahren eine Waschflüssigkeit verwendet wird, die

0,5 bis 2,5 Gew.-% mindestens eines fettsäurefreien Tensides,

1,5 bis 20 Gew.-% mindestens einer ölartigen physikalisch wasserunlöslichen oder wasserschwerlöslichen Flüssigkeit (gemessen bei Wassertemperatur),

mehr als 55 Gew.-% Wasser sowie

0,01 bis 10 Gew.-% mindestens eines Zusatzmittels, vorzugsweise mindestens aerobe und/oder anaerobe Bakterien (berechnet als Trockenmasse) und/oder mindestens eines Umsetzungshilfsmittels oder Agens und/oder mindestens eines feinteiligen Feststoffes und/oder mindestens eines Entschäumungs- oder Verarbeitungshilfsmittel enthält oder daraus besteht,

daß die Waschflüssigkeit im fein oder feinstverteilten Zustand mit dem in Gegenrichtung geleiteten Abgas in Kontakt gelangt oder in Gegenwart des Abgases vernebelt, verdüst oder verwirbelt wird, ohne daß eine den Querschnitt der Gaswaschvorrichtung abdeckende Schaumbildung erfolgt, daß die, die organisch-chemischen Bestandteile des Gases oder die Verunreinigungen enthaltende Waschflüssigkeit an oder in der Nähe des Bodens der Gaswaschvorrichtung abgeleitet oder abgezogen oder abgepumpt und unmittelbar oder unter Zwischenschaltung weiterer Verfahrensschritte zu einem Reaktions-, Umsetzungs- und/oder Absetzbehälter geführt und die von den organisch-chemischen Stoffen, Lösemitteln oder Schadstoffen ganz oder teilweise gereinigte Waschflüssigkeit ganz oder teilweise in die Gaswaschvorrichtung zurückgeleitet und erneut zur Abgasreinigung verwendet wird.

3. Verfahren nach Ansprüchen 1 und 2, dadurch gekennzeichnet, daß das eingeleitete Gas oder Abgas in Gegenstromrichtung zu der Waschflüssigkeit geleitet wird und die Waschflüssigkeit in einer Mindestberieselungsdichte von

1 bis 100 $m^3//m^2h$, vorzugsweise
5 bis 75 $m^3/m^2h$,

in der Gaswaschvorrichtung verteilt wird.

4. Verfahren nach einem oder mehreren der Ansprüche 1 bis 3, dadurch gekennzeichnet, daß als fettsäurefreies Tensid ein Gemisch von mindestens 2 Tensiden mit unterschiedlichen HLB-Werten, die sich um mehr als 3 (HLB-Werte), vorzugsweise mehr als 4 (HLB-Werte), unterscheiden, verwendet wird

11

und/oder das Tensid ein nichtschäumendes oder schwachschäumendes Tensid oder Tensidgemisch ist und/oder das Tensid oder Tensidgemisch zusätzlich ein Entschäumungsmittel enthält.

5. Verfahren nach einem oder mehreren der Ansprüche 1 bis 4, dadurch gekennzeichnet, daß eine Waschflüssigkeit verwendet wird, die

0,01 bis 10 Gew.-%, vorzugsweise
0,05 bis 8,5 Gew.-%,

mindestens eines gelösten, eines dispergierten oder suspendierten Hilfsmittels oder Agens enthält, das mit dem oder den Schadstoff(en) oder abzuscheidenden Stoff(en) unter Polymerisation, Polykondensation und/oder Polyaddition reagiert und/oder die Polymerisation oder Polykondensation und/oder Polyaddition initiiert oder beschleunigt.

6. Verfahren nach einem oder mehreren der Ansprüche 1 bis 5, dadurch gekennzeichnet, daß als Umsetzungshilfsmittel oder Agens ionische oder organische Kettenstarter, Katalysatoren und/oder Mittel zur Reaktionsbeschleunigung und/oder chemische Mittel oder Komponenten der Waschflüssigkeit zugefügt werden oder in ihr verwendet werden, die mit dem Schadstoff unter Polymerisation, Kondensation oder Polykondensation und/oder Addition oder Polyaddition reagieren, vorzugsweise unter Bildung leicht mechanisch abtrennbarer oder schwerlöslicher Verbindungen im Medium.

7. Verfahren nach einem oder mehreren der Ansprüche 1 bis 6, dadurch gekennzeichnet, daß die Schadstoffe oder Verunreinigungen enthaltende Waschflüssigkeit nach dem Durchtritt durch mindestens einen Gaswaschturm oder eine ähnliche Gaswaschvorrichtung unmittelbar oder unter Zwischenschaltung weiterer Vorrichtungen als Gesamt- oder Teilstrom zumindestens einem Reaktions- oder Umsetzungsbehälter zugeführt und auf Reaktionstemperatur eingestellt, vorzugsweise erwärmt wird.

8. Verfahren nach einem oder mehreren der Ansprüche 1 bis 7, dadurch gekennzeichnet, daß die Schadstoffe oder Verunreinigungen enthaltende Waschflüssigkeit im Reaktions- oder Umsetzungsbehälter auf Temperaturen zwischen

20 und 105 °C, vorzugsweise
35 bis 95 °C,

erwärmt und vor Rückführung in den Gaswaschturm oder die Gaswaschvorrichtung abgekühlt wird.

9. Verfahren nach einem oder mehreren der Ansprüche 1 bis 8, dadurch gekennzeichnet, daß die verwendete Waschflüssigkeit

0,001 bis 5 Gew.-%, vorzugsweise
0,5 bis 1,5 Gew.-%,

aerobe und/oder anaerobe Bakterien oder eines aeroben und/oder anaeroben Bakterienstammes (berechnet als Trockenmasse an Bakterien) enthält.

10. Verfahren nach einem oder mehreren der Ansprüche 1 bis 9, dadurch gekennzeichnet, daß neben dem nichtbakteriziden Tensid oder Tensidgemisch mindestens ein inerter feinteiliger Feststoff in einer Gewichtsmenge von

0,05 bis 8 Gew.-%, vorzugsweise
0,5 bis 5 Gew.-%,

und einer Teilchengröße

unter 1 $\mu$m, vorzugsweise
unter 0,1 $\mu$m,

in der Waschflüssigkeit mitverwendet wird.

11. Verfahren nach einem oder mehreren der Ansprüche 1 bis 10, dadurch gekennzeichnet, daß das in der Waschflüssigkeit verwendete Tensid oder Tensidgemisch in der angegebenen Matrix (Mittel und absorbierte oder absorbierte und gegebenenfalls adsorbierte Bestandteile) biologisch schwer abbaubar, innerhalb von 24 Std. nur maximal

bis zu 20 Gew.-%, vorzugsweise
bis zu 10 Gew.-%,

(bezogen auf den Gesamttensidgehalt im Mittel, umgerechnet auf 100 Gew.-Teile Tensid oder Tensidgemisch), ist.

12. Verfahren nach einem oder mehreren der Ansprüche 1 bis 11, dadurch gekennzeichnet, daß das in der Waschflüssigkeit verwendete Tensid oder Tensidgemisch aus mindestens einem fettsäurefreien, nichtionogenen, nichtschäumenden oder schwachschäumenden Tensid und/oder mindestens einem nichtionogenen schäumenden und fettsäurefreien Tensid, das zusätzlich mindestens ein Entschäumungsmittel enthält und/oder ein Gemisch von mindestens einem nichtionogenen Tensid mit mindestens einem ionogenen Tensid, die nichtschäumend oder schwachschäumend sind oder ein Entschäumungsmittel enthalten, besteht.

13. Verfahren nach einem oder mehreren der Ansprüche 1 bis 12, dadurch gekennzeichnet, daß die Waschflüssigkeit nach dem Durchtritt durch die Gaswaschvorrichtung in mindestens einen, von der Gaswaschvorrichtung getrennt angeordneten Reaktor geleitet wird, daß die Waschflüssigkeit mindestens ein chemisches Umsetzungshilfsmitteln oder Agens enthält, das mit dem oder den Schadstoff(en) oder abzuscheidenden Stoff(en) unter Polymerisation, Polykondensation und/od Polyaddition reagiert und/oder die Polymerisation oder Polykondensation und/oder Polyaddition initiiert oder beschleunigt, daß die Waschflüssigkeit in mindestens einem Reaktions- oder Umsetzungsbehälter auf Reaktionstemperatur erwärmt wird und vor Rückführung in den Gaswaschturm oder die Gaswaschvorrichtung abgekühlt wird.

14. Verfahren nach einem oder mehreren der Ansprüche 1 bis 13, dadurch gekennzeichnet, daß die nach der chemischen Reaktion in dem Umsetzungsbehälter oder Reaktor gebildeten schwerlöslichen Verbindungen mechanisch getrennt, vorzugsweise durch Filtration, Flotation und/oder Sedimentation oder durch Abzug in der Nähe des Bodens oder am Kopf abgetrennt werden, daß in dem Umsetzungsbehälter oder dem Reaktor, vorzugsweise in mindestens einem Umsetzungsbehälter oder Reaktor, der mit mindestens einem ersten Umsetzungsbehälter oder Reaktor unmittelbar über Rohrleitungen oder unter Zwischenschaltung von mindestens einem Absetzbehälter, einer Pumpe, einem Zwischenbehälter oder einem Ausgleichsbehälter in Verbindung steht, die Waschflüssigkeit unter Verwendung von Bakterien, die vorzugsweise der Flüssigkeit nach der chemischen Reaktion zugefügt werden, weiterbehandelt, umgesetzt und/oder gereinigt wird und nachfolgend die gereinigte Waschflüssigkeit unmittelbar oder unter Aufsättigung auf die Anwendungskonzentration in die Gaswaschvorrichtung zurückgeleitet wird.

15. Nichtschäumendes oder schwachschäumendes Mittel zum Reinigen von Gasen oder Abgasen unter Abtrennung von unerwünschten, chemischen Bestandteilen, vorzugsweise von organischchemischen Bestandteilen (ausgenommen Abluft aus Lackspritzkabinen), vorzugsweise zur Ausübung des Verfahrens nach einem oder mehreren der Ansprüche 1 bis 14, wobei das Mittel mindestens zweiphasig ist, und das Mittel

0,1 bis 10 Gew.-% mindestens eines fettsäurefreien Tensides,

1 bis 25 Gew.-% mindestens einer ölartigen physikalisch wasserunlöslichen oder wasserschwerlöslichen Flüssigkeit (gemessen bei Wassertemperatur),

mehr als 50 Gew.-% Wasser

0,001 bis 15 Gew.-% mindestens eines Zusatzmittels, vorzugsweise mindestens eines löslichen, dispergierbaren oder suspendierbaren Hilfsmittels, das mit dem oder den Schadstoff(en) oder abzuscheidenden Stoff(en) unter Polymerisation, Polykondensation oder Polyaddition reagiert und/oder die

EP 0 442 078 A1

Polymerisation, Polykondensation oder Polyaddition initiiert oder beschleunigt und/oder daß das Tensid aus einem Gemisch mindestens 2 Tensiden mit unterschiedlichen HLB-Werten, die sich um mehr als 3 (HLB-Werte) unterscheiden, besteht und/oder

mindestens ein Verarbeitungshilfs-, Entschäumungsmittel und/oder Bakterien enthält.

16. Mittel nach Anspruch 15, dadurch gekennzeichnet, daß das Mittel

0,5 bis 2,5 Gew.-% mindestens eines fettsäurefreien Tensides,

1,5 bis 20 Gew.-% mindestens einer ölartigen physikalisch wasserunlöslichen oder wasserschwerlöslichen Flüssigkeit (gemessen bei Wassertemperatur),

mehr als 55 Gew.-% Wasser

0,5 bis 5 Gew.-% mindestens eines inerten feinteiligen Feststoffes mit einer Teilchengröße unter 0,1 μm und/oder

0,01 bis 10 Gew.-% mindestens eines Zusatzmittels, vorzugsweise eines löslichen, dispergierbaren oder suspendierbaren Hilfsmittels, das mit dem oder den Schadstoff(en) oder abzuscheidenden Stoff-(en) unter Polymerisation, Polykondensation oder Polyaddition reagiert oder die Polymerisation, Polykondensation oder Polyaddition initiiert oder beschleunigt und/oder daß das Tensid aus einem Gemisch von mindestens 2 Tensiden mit unterschiedlichen HLB-Werten, die sich um mehr als 5 (HLB-Werte) unterscheiden, besteht und/oder

mindestens ein Verarbeitungshilfs-, Entschäumungs-und/oder Zusatzmittel und/oder aerobe und/oder anaerobe Bakterien enthält oder daraus besteht.

17. Mittel nach Ansprüchen 15 und 16, dadurch gekennzeichnet, daß das Tensid ein nichtschäumendes oder schwachschäumendes Tensid ist oder das Tensid oder Tensidgemisch zusätzlich ein Entschäumungsmittel enthält.

18. Mittel nach einem oder mehreren der Ansprüche 15 bis 17, dadurch gekennzeichnet, daß das Tensid oder Tensidgemisch aus mindestens einem nichtbakteriziden fettsäurefreien, nichtionogenen, nichtschäumenden oder schwachschäumenden Tensid und/oder mindestens einem nichtionogenen schäumenden nichtbakteriziden und fettsäurefreien Tensid, das zusätzlich mindestens ein nichtbakterizides Entschäumungsmittel enthält und/oder aus einem Gemisch von mindestens einem nichtionogenen, nichtbakteriziden Tensid mit mindestens einem ionogenen nichtbakteriziden Tensid, die nichtschäumend oder schwachschäumend sind oder ein Entschäumungsmittel enthalten, besteht oder dieses enthält.

19. Mittel nach einem oder mehreren der Ansprüche 15 bis 18, dadurch gekennzeichnet, daß das Tensid oder Tensidgemisch in der angegebenen Matrix (Mittel und absorbierte oder absorbierte und gegebenenfalls adsorbierte Bestandteile) biologisch schwer abbaubar, innerhalb von 24 Std. nur maximal

bis zu 20 Gew.-%, vorzugsweise
bis zu 10 Gew.-%,

(bezogen auf den Gesamttensidgehalt im Mittel umgerechnet auf 100 Gew.-Teile Tensid oder Tensidgemisch) ist.

20. Mittel nach einem oder mehreren der Ansprüche 15 bis 19, dadurch gekennzeichnet, daß das mindestens zweiphasige Mittel aus mindestens einer äußeren Wasserphase und einer innere Ölphase besteht.

21. Mittel nach einem oder mehreren der Ansprüche 15 bis 20, dadurch gekennzeichnet, daß der inerte, feinteilige Feststoff ein Oberflächenbehandlungsmittel oder -modifizierungsmittel, vorzugsweise ein Hydrophobierungsmittel oder Coatingmittel, enthält oder ganz oder teilweise auf der Oberfläche damit

14

bedeckt oder überzogen ist.

22. Mittel nach einem oder mehreren der Ansprüche 15 bis 21, dadurch gekennzeichnet, daß

0,001 bis 5 Gew.-% aerobe und/oder anaerobe Bakterien oder eines aeroben und/oder anaeroben Bakterienstammes (berechnet als Trockenmasse an Bakterien), vorzugsweise 0,05 bis 1,5 Gew.-%, im Mittel enthalten sind.

23. Mittel nach einem oder mehreren der Ansprüche 15 bis 22, dadurch gekennzeichnet, daß die im Mittel enthaltenden Bakterien

zu mehr als 80 Gew.-%, vorzugsweise
zu mehr als 95 Gew.-%

(bezogen auf 100 Gew.-% eingesetzte Bakterien), aus aeroben Bakterien bestehen.

24. Mittel nach einem oder mehreren der Ansprüche 15 bis 23, dadurch gekennzeichnet, daß die ölartige physikalisch wasserunlösliche oder wasserschwerlös-liche organisch-chemische Flüssigkeit oder das Flüssigkeitsgemisch einen Siedepunkt von

mehr als 450 K, vorzugsweise
mehr als 520 K,

(gemessen bei 1000 hPA) und/oder einen Dampfdruck

unter 1 hPa, vorzugsweise
unter 0,1 hPa,

(gemessen bei 293,15 K) aufweist.

25. Mittel nach einem oder mehreren der Ansprüche 15 bis 24, dadurch gekennzeichnet, daß die ölartige wasserunlösliche oder wasserschwerlösliche organisch-chemische Flüssigkeit oder das ölartige Flüssigkeitsgemisch mindestens eine flüssige organischchemische Verbindung oder ein Verbindungsgemisch enthält oder daraus besteht, die bzw. das Ester-, Äther-, Hydroxy-, Oxyäther- oder Hydroxyäther-, Keto-, und/oder organische Phosphatgruppen und/oder ein Weichmacher für Kunststoffe und/oder ein Silikonöl enthält und nicht bakterizid ist.

26. Mittel nach einem oder mehreren der Ansprüche 15 bis 25, dadurch gekennzeichnet, daß die organisch-chemische, ölartige, wasserunlösliche oder wasserschwerlösliche Flüssigkeit oder das ölartige Flüssigkeitsgemisch in der angegebenen Matrix (Mittel und absorbierte oder absorbierte und gegebenenfalls adsorbierte Bestandteile) biologisch schwer abbaubar ist, innerhalb von 24 Std. nur maximal bis zu 2 Gew.-%, vorzugsweise kleiner als 1Gew.-% (bezogen auf 100 Gew.-Teile der im Mittel enthaltenden ölartigen, organisch-chemischen, wasserunlöslichen oder wasserschwerlöslichen Flüssigkeit oder der Mischung der ölartigen, organisch-chemischen wasserunlöslichen oder wasserschwerlöslichen Flüssigkeiten).

27. Mittel nach einem oder mehreren der Ansprüche 15 bis 26, dadurch gekennzeichnet, daß das Mittel

0,001 bis 3 Gew.-%, vorzugsweise
0,1 bis 1 Gew.-%,

mindestens eines Co-Surfactant, Co-Tensides oder eines Hilfstensides enthält und/oder das Tensid teilweise ersetzt, das die Wirkung des Tensides verstärkt, vorzugsweise ausgewählt aus der Gruppe der ein- oder mehrwertigen Alkohole oder Polyalkohole, Hydroxyester, Äther oder Polyäther, Ester und/oder Hydroxyäther oder Polyhydroxyäther.

28. Mittel nach einem oder mehreren der Ansprüche 15 bis 27, dadurch gekennzeichnet, daß die Bestandteile des Mittels als in Wasser nichtschäumende oder in Wasser schwachschäumende Verbindungen und/oder durch einen entsprechenden Gewichtsanteil eines Entschäumungsmittels in einer derartigen Gewichtskonzentration vorliegen und/oder einer derartigen Auswahl eingesetzt werden, daß ein nichtschäumendes oder sehr schwach schäumendes Mittel zur Reinigung von Gasen oder Abgasen vorliegt.

29. Mittel nach einem oder mehreren der Ansprüche 15 bis 28, dadurch gekennzeichnet, daß das Gewichtsverhältnis der nichtbakteriziden ölartigen Flüssigkeit zu Wasser

1 : 2 bis 1 : 100, vorzugsweise
1 : 4 bis 1 : 60,

beträgt.

30. Mittel nach einem oder mehreren der Ansprüche 15 bis 29, dadurch gekennzeichnet, daß das Gewichtsverhältnis von Tensid und/oder dem feinteiligen inerten Feststoff zu der nichtbakteriziden, ölartigen Flüssigkeit

1 : 0,8 bis 1 : 45, vorzugsweise
1 : 1,2 bis 1 : 25,

beträgt.

31. Mittel nach einem oder mehreren der Ansprüche 15 bis 30, dadurch gekennzeichnet, daß das Mittel als Zusatzmittel

0 oder 0,1 Gew.-% bis 10 Gew.-%, vorzugsweise
0,5 Gew.-% bis 9,8 Gew.-%

mindestens eines feinteiligen Trägerstoffes mit einem mittleren Körnungsdurchmesser von

unter 4 mm, vorzugsweise
unter 200 $\mu$m,

enthält, vorzugsweise ausgewählt aus der Gruppe der Trägerstoffe mit einer spezifischen Oberfläche (gemessen nach BET) von mehr als 300 m²/g, vorzugsweise Aktivkohle, Silikate, Mischsilikate, Hydroxysilikate, Erdalkalioxide und/oder Aluminiumverbindungen enthaltende Silikate, Siliziumverbindungen einschließlich Silikate oder Siliziumoxid enthaltende Erdalkalioxide oder Erdalkalimischoxide, Kieselsäure, keramische Trägermaterialien, sämtliche vorgenannten Trägermaterialien in hydrophobierter oder nichthydrophobierter Form, allein oder im Gemisch mit anderen Trägerstoffen.

16

## Europäisches Patentamt

**EUROPÄISCHER RECHERCHENBERICHT**

Nummer der Anmeldung

**EP 90 12 3951**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 602 283 (J. COX)<br>* Seite 11, Zeile 25 - Seite 12, Zeile 34 *<br>– – – | 1,15 | B 01 D 53/00<br>B 01 D 53/34 |
| A | DE-A-3 641 442 (KERAMCHEMIE)<br>* Ansprüche 1-7; Spalte 3, Zeilen 17-47 *<br>– – – | 1,15 | |
| A | US-A-4 898 721 (R.M. ALWAY)<br>* Ansprüche 1-5 *<br>– – – | 1,15 | |
| A,P | EP-A-0 357 960 (ARASIN)<br>– – – | | |
| A | EP-A-0 281 844 (ARASIN)<br>– – – – – | | |

**RECHERCHIERTE SACHGEBIETE (Int. Cl.5)**

B 01 D
B 01 F

Der vorliegende Recherchenbericht wurde für alle Patentansprüche erstellt

| Recherchenort | Abschlußdatum der Recherche | Prüfer |
|---|---|---|
| Den Haag | 17 Mai 91 | KANOLDT W.W. |